# EUROPEAN PATENT APPLICATION

(11) **EP 4 439 737 A1**
(43) Date of publication of application: **02.10.2024**
(21) Application number: 24161198.7
(22) Date of filing: 04.03.2024
(51) Int. Cl.: H01M 4/66, H01M 10/0562, H01M 10/0585, H01M 50/102, H01M 50/121, H01M 50/186, H01M 50/545, H01M 50/547, H01M 4/04, H01M 4/131, H01M 4/133, H01M 4/1391, H01M 4/1393, H01M 10/04, H01M 10/0525, H01M 50/141, H01M 50/145, H01M 50/193

(54) **THIN TYPE STACKED BATTERY**

(30) Priority: 30.03.2023 JP 2023055290
(71) Applicant: TOYOTA JIDOSHA KABUSHIKI KAISHA, Toyota-shi, Aichi-ken, 471-8571 (JP)
(72) Inventor: SUZUKI, Yushi, Toyota-shi, 471-8571 (JP)
(74) Representative: D Young & Co LLP

(57) **Abstract**

A thin type stacked battery includes battery pack formed by a plurality of stacked unit cells, each formed by positive electrode current collector, positive electrode, electrolyte, negative electrode, and negative electrode current collector stacked in that order, and seal material. The positive electrode current collector of one unit cell, the negative electrode current collector of another unit cell, and the seal material function as an exterior body surrounding a surrounded part. At least one of the positive electrode current collector of one unit cell and the negative electrode current collector of the other unit cell has a metal layer. At least the negative electrode current collector of one unit cell and the positive electrode current collector of the other unit cell have resin layers.

## Description

### FIELD

The present disclosure relates to a thin type stacked battery.

### BACKGROUND

PTL 1 (Japanese Unexamined Patent Publication No. 2020-061300) describes a battery formed by stacking layers of unit cells. In the art described in PLT 1, current collectors of the battery have conductive resin layers so as to lighten the weight of the battery.

If attempting to reduce the thickness in addition to lightening the weight of the battery, for example, a battery case (metal can case) such as described in PTL 1 is liable to make reduction of the thickness of the battery difficult, so a caseless battery is desirable. If the battery described in PLT 1 is made caseless, moisture reaches the electrode bodies through current collectors having conductive resin layers and the battery performance is liable to deteriorate.

### SUMMARY

In consideration of the above-mentioned point, the present disclosure has as its object the provision of a thin type stacked battery able to simultaneously satisfy lighter weight, reduced thickness, and moisture permeation resistance.
(1) One aspect of the present disclosure is a thin type stacked battery including: a battery pack formed by a plurality of stacked unit cells, each unit cell being formed by positive electrode current collector, positive electrode, electrolyte, negative electrode, and negative electrode current collector stacked in that order, and a seal material, wherein the positive electrode current collector of a first end unit cell which is the unit cell positioned at one end in the stacking direction among the plurality of stacked unit cells forming the battery pack, wherein the positive electrode current collector of the first end unit cell does not abut against the negative electrode current collector of the unit cell which adjoins the first end unit cell, the negative electrode current collector of a second end unit cell which is the unit cell positioned at the other end in the stacking direction among the plurality of stacked unit cells forming the battery pack, wherein the negative electrode current collector of the second end unit cell does not abut against the positive electrode current collector of the unit cell which adjoins the second end unit cell, and the seal material function as an exterior body surrounding a surrounded part which corresponds to the battery pack except the positive electrode current collector of the first end unit cell and the negative electrode current collector of the second end unit cell, at least one of the positive electrode current collector of the first end unit cell and the negative electrode current collector of the second end unit cell has a metal layer, and at least the negative electrode current collector of the first end unit cell and the positive electrode current collector of the second end unit cell have resin layers.
(2) In the thin type stacked battery of the aspect (1), the electrolyte may be a solid electrolyte.
(3) In the thin type stacked battery of the aspect (1), the negative electrode current collector of the first end unit cell, the positive electrode current collector of the second end unit cell, and the positive electrode current collectors and the negative electrode current collectors of the unit cells other than the first end unit cell and the second end unit cell among the plurality of stacked unit cells forming the battery pack may be embedded in the seal material.
(4) In the thin type stacked battery according to the aspect (1), a thickness of each of the plurality of stacked unit cells may be 0.1 to 2 mm.
(5) In the thin type stacked battery according to the aspect (1), an electrolyte may be included in at least one of the positive electrode and the negative electrode.
(6) In the thin type stacked battery of the aspect (1), the metal layer of the positive electrode current collector of the first end unit cell may be larger than the positive electrode of the first end unit cell, and the metal layer of the negative electrode current collector of the second end unit cell may be larger than the negative electrode of the second end unit cell.
(7) In the thin type stacked battery of the aspect (1), the metal layer of the positive electrode current collector of the first end unit cell and the seal material may be welded, and the metal layer of the negative electrode current collector of the second end unit cell and the seal material may be welded.
(8) In the thin type stacked battery of the aspect (1), the seal material surrounding the positive electrode, the electrolyte, and the negative electrode of the first end unit cell and the seal material surrounding the positive electrode, the electrolyte, and the negative electrode of the unit cell adjoining the first end unit cell may be fused.
(9) In the thin type stacked battery of the aspect (1), the battery pack may include the unit cell which is not either of the first end unit cell and the second end unit cell, and the positive electrode current collector and the negative electrode current collector of the unit cell which is not either of the first end unit cell and the second end unit cell may have resin layers.
(10) In the thin type stacked battery of the aspect (1), the unit cell adjoining the first end unit cell may be the second end unit cell, and the unit cell adjoining the second end unit cell may be the first end unit cell.
(11) In the thin type stacked battery of the aspect (1), one of the positive electrode current collector of the first end unit cell and the negative electrode current collector of the second end unit cell may be a current collector which does not have a metal layer, and the current collector which does not have the metal layer may have a resin layer.
(12) In the thin type stacked battery of the aspect (1), the positive electrode current collector of the first end unit cell and the negative electrode current collector of the second end unit cell may have metal layers.
(13) In the thin type stacked battery of the aspect (12), the positive electrode current collector of the first end unit cell may have a resin layer, and the negative electrode current collector of the second end unit cell may have a resin layer.
(14) In the thin type stacked battery of the aspect (13), the resin layer of the positive electrode current collector of the first end unit cell may abut against the positive electrode of the first end unit cell, and the resin layer of the negative electrode current collector of the second end unit cell may abut against the negative electrode of the second end unit cell.
(15) In the thin type stacked battery of the aspect (12), the positive electrode current collector of the first end unit cell having the metal layer may not have a resin layer, and the negative electrode current collector of the second end unit cell having the metal layer may not have a resin layer.
(16) In the thin type stacked battery of the aspect (15), the metal layer of the positive electrode current collector of the first end unit cell may abut against the positive electrode of the first end unit cell, and the metal layer of the negative electrode current collector of the second end unit cell may abut against the negative electrode of the second end unit cell.
(17) In the thin type stacked battery of the aspect (9), the resin layer of the negative electrode current collector of the first end unit cell may abut against the resin layer of the positive electrode current collector of the unit cell which is not either of the first end unit cell and the second end unit cell, and the resin layer of the negative electrode current collector of the unit cell which is not either of the first end unit cell and the second end unit cell may abut against the resin layer of the positive electrode current collector of the second end unit cell.

According to the present disclosure, it is possible to simultaneously satisfy lighter weight, reduced thickness, and moisture permeation resistance of the thin type stacked battery.

### BRIEF DESCRIPTION OF DRAWINGS

FIG. 1 is a view schematically showing one example of a thin type stacked battery 100 of a first embodiment.
FIG. 2 is a view schematically showing one example of part of a unit cell 10-1 (10-2, 10-3) included in the thin type stacked battery 100 of the first embodiment.
FIG. 3 is a view schematically showing one example of the thin type stacked battery 100 of a second embodiment.
FIG. 4A is a view for explaining one example of a process of production of part of the unit cell 10-1 (10-2) forming part of the thin type stacked battery 100 of the second embodiment.
FIG. 4B is a view for explaining one example of a process of production of part of the unit cell 10-1 (10-2) forming part of the thin type stacked battery 100 of the second embodiment.
FIG. 4C is a view for explaining one example of a process of production of part of the unit cell 10-1 (10-2) forming part of the thin type stacked battery 100 of the second embodiment.
FIG. 4D is a view for explaining one example of a process of production of part of the unit cell 10-1 (10-2) forming part of the thin type stacked battery 100 of the second embodiment.
FIG. 5A is a view for explaining one example of a process of production of part of the unit cell 10-1 (10-2) forming part of the thin type stacked battery 100 of the second embodiment.
FIG. 5B is a view for explaining one example of a process of production of part of the unit cell 10-1 (10-2) forming part of the thin type stacked battery 100 of the second embodiment.
FIG. 5C is a view for explaining one example of a process of production of part of the unit cell 10-1 (10-2) forming part of the thin type stacked battery 100 of the second embodiment.
FIG. 6A is a view for explaining one example of a process of production of the thin type stacked battery 100 of the second embodiment.
FIG. 6B is a view for explaining one example of a process of production of the thin type stacked battery 100 of the second embodiment.
FIG. 7A shows a thickness of a prototype of the thin type stacked battery 100 of the second embodiment.
FIG. 7B shows a voltage of the prototype of the thin type stacked battery 100 of the second embodiment.

### DESCRIPTION OF EMBODIMENTS

Below, referring to the drawings, embodiments of a thin type stacked battery of the present disclosure will be explained.

### <First Embodiment>

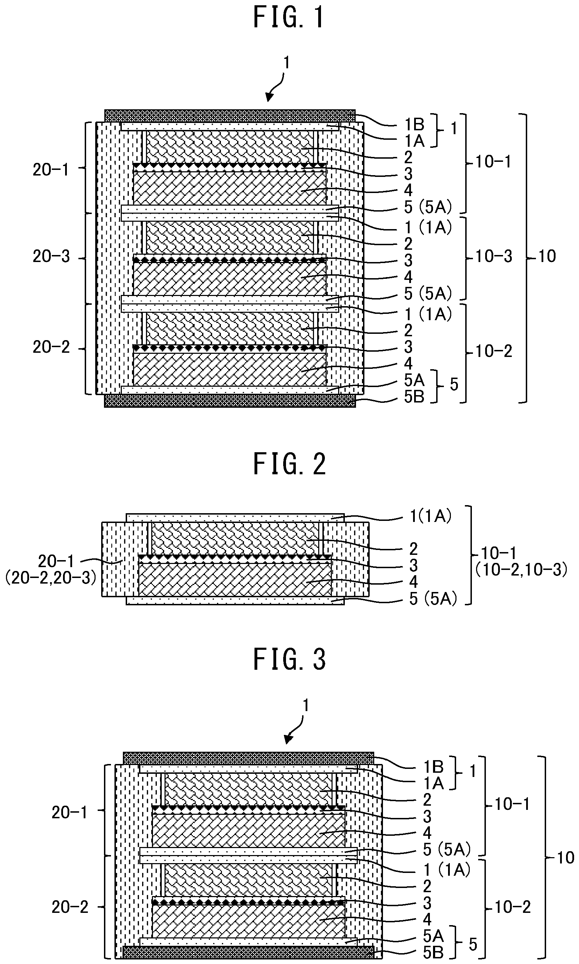

FIG. 1 is a view schematically showing one example of the thin type stacked battery 100 of a first embodiment. FIG. 2 is a view schematically showing one example of part of a unit cell 10-1 (10-2, 10-3) forming part of a battery pack 10 forming part of the thin type stacked battery 100 of the first embodiment shown in FIG. 1.

In the example shown in FIG. 1 and FIG. 2, the thin type stacked battery 100 is provided with the battery pack 10 formed by the unit cell 10-1, the unit cell 10-2, and the unit cell 10-3 stacked together and with seal materials 20-1, 20-2, and 20-3.

The unit cell 10-1 is positioned at one end (end of top side of FIG. 1) in the stacking direction (up-down direction of FIG. 1) among the unit cells 10-1, 10-2, and 10-3 forming the battery pack 10. The unit cell 10-1 is formed by positive electrode current collector 1, positive electrode 2, separator 3 including an electrolyte (for example, the separator 3 in which the electrolyte is impregnated), negative electrode 4, and negative electrode current collector 5 stacked in that order from above in FIG. 1 and FIG. 2. The positive electrode current collector 1 of the unit cell 10-1 has resin layer 1A and metal layer 1B.

As the resin layer 1A of the positive electrode current collector 1 of the unit cell 10-1, it is possible to use any resin current collector functioning as the positive electrode current collector 1. That is, the resin layer 1A of the positive electrode current collector 1 of the unit cell 10-1 is a conductive resin layer. The resin layer 1A of the positive electrode current collector 1 of the unit cell 10-1 is preferably a light weight current collector using a resin as its base. As the resin layer 1A of the positive electrode current collector 1 of the unit cell 10-1, for example, a resin current collector (vinyl resin: VGCF^{®} (vapor grown carbon fiber)=90:10 wt%) is used.

As the metal layer 1B of the positive electrode current collector 1 of the unit cell 10-1, it is possible to use any metal material through which moisture does not permeate. As the metal layer 1B of the positive electrode current collector 1 of the unit cell 10-1, for example, aluminum foil can be used.

The positive electrode 2 of the unit cell 10-1 abuts against the resin layer 1A of the positive electrode current collector 1 of the unit cell 10-1.

As a positive electrode material forming the positive electrode 2 of the unit cell 10-1, for example, LiNiCoMn, SE (solid electrolyte) (LiI-LiBr-Li₂ S-P₂ S₅), VGCF (vapor grown carbon fiber), and SBR (styrene-butadiene rubber) mixed together can be used. Positive electrode active material, conductive assistant, and tackifier (binder) contained in the positive electrode 2 of the unit cell 10-1 are not designated.

That is, the positive electrode 2 of the unit cell 10-1 may contain the electrolyte. If the positive electrode 2 of the unit cell 10-1 contains the electrolyte, the electrolyte is preferably the solid electrolyte with a high heat resistance (sulfide or oxide). This is because the solid electrolyte which is resistant to heat is necessary for heat welding of the seal material 20-1 etc.

As the positive electrode active material, for example, LiCoO₂ , LiNiO₂ , LiNiₐ Co_{b} O₂ (a+b=1, 0<a<1, 0<b<1), LiMnO₂, LiMn₂ O₄, LiNiₐ Co_{b} Mn_{c} O₂ (a+b+c=1, 0<a<1, 0<b<1, 0<c<1), LiFePO₄, etc. can be used. Further, as the conductive assistant, for example, acetylene black (AB) etc. can be used. As the binder, for example, polyvinylidene fluoride (PVdF) etc. can be used.

The electrolyte contained in the separator 3 of the unit cell 10-1 is preferably the solid electrolyte with the high heat resistance due to the above-mentioned reasons.

As the material forming the separator 3 of the unit cell 10-1, for example, the SE and the SBR mixed together may be used.

The separator 3 of the unit cell 10-1 may be substantially formed by a solid electrolyte material. The separator 3 of the unit cell 10-1 may, for example, further contain the binder etc. The separator 3 of the unit cell 10-1 can contain any solid electrolyte material. The separator 3 of the unit cell 10-1 may, for example, contain an Li₂ S-P₂ S₅ -based solid electrolyte etc.

As negative electrode material forming the negative electrode 4 of the unit cell 10-1, for example, graphite, SE (LiI-LiBr-Li₂ S-P₂ S₅ ), VGCF, and SBR mixed together can be used. Negative electrode active material, conductive assistant, and tackifier contained in the negative electrode 4 of the unit cell 10-1 are not designated.

That is, the negative electrode 4 of the unit cell 10-1 may contain the electrolyte. If the negative electrode 4 of the unit cell 10-1 contains the electrolyte, due to the above-mentioned reasons, the electrolyte is preferably the solid electrolyte with the high heat resistance.

The negative electrode current collector 5 of the unit cell 10-1 has a resin layer 5A and does not have a metal layer 5B.

The resin layer 5A of the negative electrode current collector 5 of the unit cell 10-1 abuts against the negative electrode 4 of the unit cell 10-1.

As the resin layer 5A of the negative electrode current collector 5 of the unit cell 10-1, it is possible to use any resin current collector functioning as the negative electrode current collector 5. That is, the resin layer 5A of the negative electrode current collector 5 of the unit cell 10-1 is the conductive resin layer. The resin layer 5A of the negative electrode current collector 5 of the unit cell 10-1 is preferably the light weight current collector using the resin as its base. As the resin layer 5A of the negative electrode current collector 5 of the unit cell 10-1, for example, the resin current collector (vinyl resin: VGCF (vapor grown carbon fiber)=90:10 wt%) is used.

The unit cell 10-2 is positioned at the other end (end of bottom side of FIG. 1) in the stacking direction (up-down direction of FIG. 1) among the three unit cells 10-1, 10-2, and 10-3 forming the battery pack 10. The unit cell 10-2 is formed by the positive electrode current collector 1, the positive electrode 2, the separator 3 including the electrolyte (for example, the separator 3 in which the electrolyte is impregnated), the negative electrode 4, and the negative electrode current collector 5 stacked in that order from above in FIG. 1 and FIG. 2.

The positive electrode current collector 1 of the unit cell 10-2 has the resin layer 1A and does not have the metal layer 1B. The resin layer 1A of the positive electrode current collector 1 of the unit cell 10-2 is formed in the same way as the resin layer 1A of the positive electrode current collector 1 of the unit cell 10-1.

The positive electrode 2 of the unit cell 10-2 abuts against the resin layer 1A of the positive electrode current collector 1 of the unit cell 10-2. The positive electrode 2 of the unit cell 10-2 is formed in the same way as the positive electrode 2 of the unit cell 10-1.

The separator 3 of the unit cell 10-2 is formed in the same way as the separator 3 of the unit cell 10-1.

The negative electrode 4 of the unit cell 10-2 is formed in the same way as the negative electrode 4 of the unit cell 10-1.

The negative electrode current collector 5 of the unit cell 10-2 has the resin layer 5A and the metal layer 5B.

The resin layer 5A of the negative electrode current collector 5 of the unit cell 10-2 abuts against the negative electrode 4 of the unit cell 10-2. The resin layer 5A of the negative electrode current collector 5 of the unit cell 10-2 is formed in the same way as the resin layer 5A of the negative electrode current collector 5 of the unit cell 10-1.

As the metal layer 5B of the negative electrode current collector 5 of the unit cell 10-2, it is possible to use any metal material through which moisture does not permeate. As the metal layer 5B of the negative electrode current collector 5 of the unit cell 10-2, for example, copper foil or nickel foil can be used.

In the example shown in FIG. 1 and FIG. 2, the positive electrode current collector 1 of the unit cell 10-1 has the metal layer 1B and the negative electrode current collector 5 of the unit cell 10-2 has the metal layer 5B, but in another example, the positive electrode current collector 1 of the unit cell 10-1 may have the metal layer 1B and the negative electrode current collector 5 of the unit cell 10-2 may not have the metal layer 5B. That is, in this example, the negative electrode current collector 5 of the unit cell 10-2 is a current collector which does not have the metal layer 5B, while the negative electrode current collector 5 of the unit cell 10-2 not having the metal layer 5B has the resin layer 5A.

In still another example, the positive electrode current collector 1 of the unit cell 10-1 may not have the metal layer 1B while the negative electrode current collector 5 of the unit cell 10-2 may have the metal layer 5B. That is, in this example, the positive electrode current collector 1 of the unit cell 10-1 is a current collector which does not have the metal layer 1B while the positive electrode current collector 1 of the unit cell 10-1 not having the metal layer 1B has the resin layer 1A.

In the example shown in FIG. 1 and FIG. 2, the unit cell 10-3 is positioned in the middle of the stacking direction (up-down direction of FIG. 1) among the three unit cells 10-1, 10-2, and 10-3 forming the battery pack 10. That is, the unit cell 10-3 is arranged adjoining the unit cell 10-1 and adjoining the unit cell 10-2. The unit cell 10-3 is formed by the positive electrode current collector 1, the positive electrode 2, the separator 3 including the electrolyte (for example, the separator 3 in which the electrolyte is impregnated), the negative electrode 4, and the negative electrode current collector 5 stacked in that order from above in FIG. 1 and FIG. 2.

The positive electrode current collector 1 of the unit cell 10-3 has the resin layer 1A and does not have the metal layer 1B. The resin layer 1A of the positive electrode current collector 1 of the unit cell 10-3 abuts against the resin layer 5A of the negative electrode current collector 5 of the unit cell 10-1. That is, the resin layer 5A of the negative electrode current collector 5 of the unit cell 10-1 abuts against the resin layer 1A of the positive electrode current collector 1 of the unit cell 10-3 which is neither the unit cell 10-1 nor the unit cell 10-2. The resin layer 1A of the positive electrode current collector 1 of the unit cell 10-3 is formed in the same way as the resin layer 1A of the positive electrode current collector 1 of the unit cell 10-1.

The positive electrode 2 of the unit cell 10-3 abuts against the resin layer 1A of the positive electrode current collector 1 of the unit cell 10-3. The positive electrode 2 of the unit cell 10-3 is formed in the same way as the positive electrode 2 of the unit cell 10-1.

The separator 3 of the unit cell 10-3 is formed in the same way as the separator 3 of the unit cell 10-1.

The negative electrode 4 of the unit cell 10-3 is formed in the same way as the negative electrode 4 of the unit cell 10-1.

The negative electrode current collector 5 of the unit cell 10-3 has the resin layer 5A but does not have the metal layer 5B. The resin layer 5A of the negative electrode current collector 5 of the unit cell 10-3 abuts against the negative electrode 4 of the unit cell 10-3. Further, the resin layer 5A of the negative electrode current collector 5 of the unit cell 10-3 abuts against the resin layer 1A of the positive electrode current collector 1 of the unit cell 10-2. That is, the resin layer 5A of the negative electrode current collector 5 of the unit cell 10-3 which is neither the unit cell 10-1 nor the unit cell 10-2 abuts against the resin layer 1A of the positive electrode current collector 1 of the unit cell 10-2. The resin layer 5A of the negative electrode current collector 5 of the unit cell 10-3 is formed in the same way as the resin layer 5A of the negative electrode current collector 5 of the unit cell 10-1.

In the example shown in FIG. 1 and FIG. 2, a thickness of each of the unit cells 10-1, 10-2, and 10-3 is 0.1 to 2 mm.

In the example shown in FIG. 1 and FIG. 2, the battery pack 10 is formed by stacking three unit cells 10-1, 10-2, and 10-3, but in other examples, the battery pack 10 may be formed by stacking any number greater than or equal to 4 of unit cells 10-1, 10-2, 10-3, ...

In the example shown in FIG. 1 and FIG. 2, the seal material 20-1 has the function of sealing the unit cell 10-1. In more detail, the seal material 20-1 has the function of leaving only the metal layer 1B of the positive electrode current collector 1 of the unit cell 10-1 exposed and covering and sealing the remaining parts of the unit cell 10-1. That is, the seal material 20-1 surrounds the positive electrode 2, the separator 3 including the electrolyte, and the negative electrode 4 of the unit cell 10-1. As the seal material 20-1, it is possible to use any resin material having the function of covering and sealing the remaining parts of the unit cell 10-1. As the seal material 20-1, for example, PP (polypropylene) film can be used.

The seal material 20-2 has the function of sealing the unit cell 10-2. In more detail, the seal material 20-2 has the function of leaving only the metal layer 5B of the negative electrode current collector 5 of the unit cell 10-2 exposed and covering and sealing the remaining parts of the unit cell 10-2. That is, the seal material 20-2 surrounds the positive electrode 2, the separator 3 including the electrolyte, and the negative electrode 4 of the unit cell 10-2. As the seal material 20-2, it is possible to use the resin material similar to the seal material 20-1.

The seal material 20-3 has the function of covering and sealing the unit cell 10-3. That is, the seal material 20-3 surrounds the positive electrode 2, the separator 3 including the electrolyte, and the negative electrode 4 of the unit cell 10-3. Further, the seal material 20-3 and the seal material 20-1 are fused and the seal material 20-3 and the seal material 20-2 are fused. For this reason, the unit cells 10-1, 10-2, and 10-3 can be fixed by the seal materials 20-1, 20-2, and 20-3. Further, it is possible to keep down the liability of water invading the battery pack 10 through the clearance between the seal material 20-1 and the seal material 20-3 and the liability of water invading the battery pack 10 through the clearance between the seal material 20-2 and the seal material 20-3. As the seal material 20-3, it is possible to use the resin material similar to the seal material 20-1.

That is, the seal materials 20-1, 20-2, and 20-3 have the function of leaving the metal layer 1B of the positive electrode current collector 1 of the unit cell 10-1 and the metal layer 5B of the negative electrode current collector 5 of the unit cell 10-2 exposed and covering and sealing the remaining parts of the battery pack 10.

That is, in the example shown in FIG. 1 and FIG. 2, the positive electrode current collector 1 of the unit cell 10-1, the negative electrode current collector 5 of the unit cell 10-2, and the seal materials 20-1, 20-2, and 20-3 function as an exterior body surrounding a surrounded part which corresponds to the battery pack 10 except the positive electrode current collector 1 of the unit cell 10-1 and the negative electrode current collector 5 of the unit cell 10-2. In other words, the negative electrode current collector 5 of the unit cell 10-1, the positive electrode current collector 1 of the unit cell 10-2, and the positive electrode current collector 1 and negative electrode current collector 5 of the unit cell 10-3 other than the unit cell 10-1 and unit cell 10-2 among the unit cells 10-1, 10-2, and 10-3 forming the battery pack 10 are embedded in the seal materials 20-1, 20-2, and 20-3. For this reason, it is possible to suppress short circuit between the positive electrode current collectors 1 and the negative electrode current collectors 5 of the unit cells 10-1, 10-2, and 10-3.

Further, in the example shown in FIG. 1 and FIG. 2, as explained above, the positive electrode current collector 1 of the unit cell 10-1 has the metal layer 1B and the negative electrode current collector 5 of the unit cell 10-2 has the metal layer 5B.

Furthermore, in the example shown in FIG. 1 and FIG. 2, as explained above, the positive electrode current collector 1 of the unit cell 10-1 has the resin layer 1A and the negative electrode current collector 5 of the unit cell 10-1 has the resin layer 5A, the positive electrode current collector 1 of the unit cell 10-2 has the resin layer 1A and the negative electrode current collector 5 of the unit cell 10-2 has the resin layer 5A, and the positive electrode current collector 1 of the unit cell 10-3 has the resin layer 1A and the negative electrode current collector 5 of the unit cell 10-3 has the resin layer 5A.

In another example, the positive electrode current collector 1 of the unit cell 10-1 having the metal layer 1B may not have the resin layer 1A and the negative electrode current collector 5 of the unit cell 10-2 having the metal layer 5B may not have the resin layer 5A. In this example, the metal layer 1B of the positive electrode current collector 1 of the unit cell 10-1 abuts against the positive electrode 2 of the unit cell 10-1 and the metal layer 5B of the negative electrode current collector 5 of the unit cell 10-2 abuts against the negative electrode 4 of the unit cell 10-2.

In more detail, in the example shown in FIG. 1 and FIG. 2, (left-right direction dimension of FIG. 1 of) the metal layer 1B of the positive electrode current collector 1 of the unit cell 10-1 is larger than (left-right direction dimension of FIG. 1 of) the positive electrode 2 of the unit cell 10-1. Further, the metal layer 1B of the positive electrode current collector 1 of the unit cell 10-1 and the seal material 20-1 are welded. For this reason, permeation of moisture to the positive electrode 2 of the unit cell 10-1 can be suppressed by the metal layer 1B of the positive electrode current collector 1 of the unit cell 10-2 and the seal material 20-1.

Furthermore, (left-right direction dimension of FIG. 1 of) the metal layer 5B of the negative electrode current collector 5 of the unit cell 10-2 is larger than (left-right direction dimension of FIG. 1 of) the negative electrode 4 of the unit cell 10-2. Further, the metal layer 5B of the negative electrode current collector 5 of the unit cell 10-2 and the seal material 20-2 are welded. For this reason, permeation of moisture to the negative electrode 4 of the unit cell 10-2 can be suppressed by the metal layer 5B of the negative electrode current collector 5 of the unit cell 10-2 and the seal material 20-2.

In the thin type stacked battery 100 of the first embodiment, it is possible to simultaneously satisfy lighter weight, reduced thickness, and moisture permeation resistance.

### <Second Embodiment>

Below, a second embodiment of the thin type stacked battery of the present disclosure will be explained. The thin type stacked battery 100 of the second embodiment is formed in the same way as the above-mentioned thin type stacked battery 100 of the first embodiment except for the points explained below.

FIG. 3 is a view schematically showing one example of the thin type stacked battery 100 of the second embodiment.

In the example shown in FIG. 3, the thin type stacked battery 100 is provided with the battery pack 10 formed by the unit cell 10-1 and the unit cell 10-2 stacked together and with the seal materials 20-1 and 20-2.

The unit cell 10-1 is positioned at one end (end of top side of FIG. 3) in the stacking direction (up-down direction of FIG. 3) among the two unit cells 10-1 and 10-2 forming the battery pack 10. The unit cell 10-1 is formed in the same way as the unit cell 10-1 of the thin type stacked battery 100 of the first embodiment.

The unit cell 10-2 is positioned at the other end (end of bottom side of FIG. 3) in the stacking direction (up-down direction of FIG. 3) of the two unit cells 10-1 and 10-2 forming the battery pack 10. The unit cell 10-2 is arranged adjoining the unit cell 10-1 and is formed in the same way as the unit cell 10-2 of the thin type stacked battery 100 of the first embodiment.

In the example shown in FIG. 3, unlike the example shown in FIG. 1 and FIG. 2, the resin layer 1A of the positive electrode current collector 1 of the unit cell 10-2 abuts against the resin layer 5A of the negative electrode current collector 5 of the unit cell 10-1.

Further, in the example shown in FIG. 3, the seal material 20-1 and the seal material 20-2 are fused together and the unit cells 10-1, 10-2 are fixed by the seal materials 20-1 and 20-2. The seal materials 20-1 and 20-2 leave the metal layer 1B of the positive electrode current collector 1 of the unit cell 10-1 and the metal layer 5B of the negative electrode current collector 5 of the unit cell 10-2 exposed and cover and seal the remaining parts of the battery pack 10.

In the example shown in FIG. 3, the positive electrode current collector 1 of the unit cell 10-1, the negative electrode current collector 5 of the unit cell 10-2, and the seal materials 20-1 and 20-2 function as the exterior body surrounding the surrounded part which corresponds to the battery pack 10 except the positive electrode current collector 1 of the unit cell 10-1 and the negative electrode current collector 5 of the unit cell 10-2, and the negative electrode current collector 5 of the unit cell 10-1 and the positive electrode current collector 1 of the unit cell 10-2 are embedded in the seal materials 20-1 and 20-2.

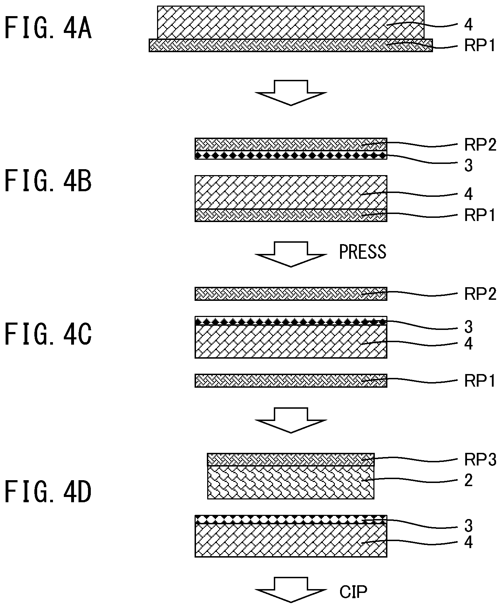

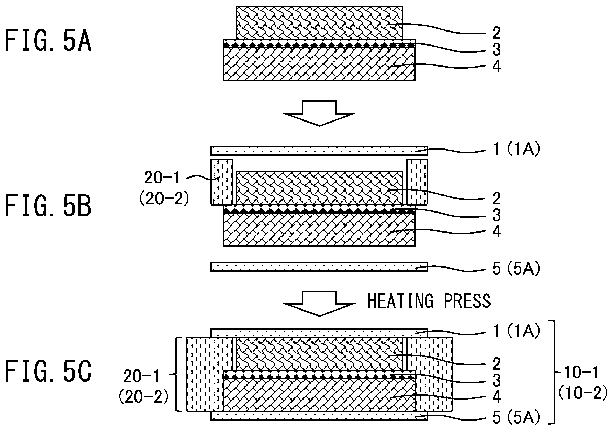

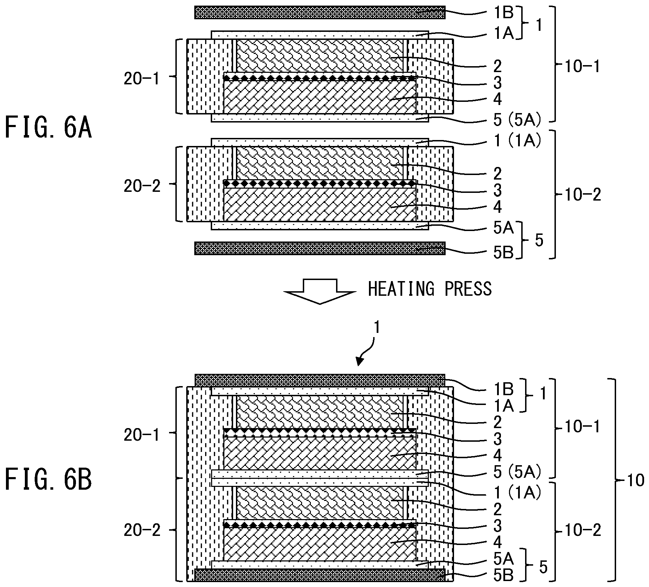

FIG. 4A to FIG. 4D and FIG. 5A to FIG. 5C are views for explaining one example of the process of production of part of the unit cell 10-1 (10-2) forming part of the thin type stacked battery 100 of the second embodiment. FIG. 6A and FIG. 6B are views for explaining one example of the process of production the thin type stacked battery 100 of the second embodiment.

In the example shown in FIG. 4A to FIG. 6B, to produce the unit cell 10-1 (10-2), first, as shown in FIG. 4A, for example, using a solvent such as butyl lactate etc., the negative electrode material is made to disperse and is coated on release paper RP1 whereby the negative electrode 4 with the release paper RP1 attached is prepared.

As the solvent, one other than butyl lactate may be used, but heptane, butyl lactate, etc. which are resistant to reacting with the SE are preferable.

While not shown in FIG. 4A, for example, using the solvent such as the butyl lactate etc., the positive electrode material is made to disperse and is coated on release paper RP3 (see FIG. 4D) whereby the positive electrode 2 (see FIG. 4D) with the release paper RP3 attached is prepared. Further, for example, using the solvent such as the butyl lactate etc., separator material is made to disperse and is coated on release paper RP2 (see FIG. 4B) whereby the separator 3 (see FIG. 4B) with the release paper RP2 attached is prepared.

Next, the positive electrode 2 with the release paper RP3 attached is cut out (see FIG. 4D). Further, as shown in FIG. 4B, the negative electrode 4 with the release paper RP1 attached is cut out and the separator 3 with the release paper RP2 attached is cut out. The shapes of the cut out positive electrode 2 with the release paper RP3 attached, the cut out negative electrode 4 with the release paper RP1 attached, and the cut out separator 3 with the release paper RP2 attached may be square, circular or polygonal. The positive electrode 2 is preferably smaller than the negative electrode 4.

Next, as shown in FIG. 4B and FIG. 4C, the negative electrode 4 and the separator 3 are made to face each other and are monoaxially pressed (for example, 392 MPa, 1 min). To raise the adhesion of the solid electrolyte, a pressure of 100 MPa or more is preferable.

Next, as shown in FIG. 4C, the release paper RP1 of the negative electrode 4 is removed and the release paper RP2 of the separator 3 is removed.

Next, as shown in FIG. 4C, the positive electrode 2 is made to face the separator 3 and is pressed by hydrostatic pressing (CIP: Cold Isostatic Pressing) (for example, 392 MPa, 1 min). A pressing method other than the hydrostatic pressing may be used. The hydrostatic pressing is preferable from the viewpoint of suppressing short-circuits.

Next, as shown in FIG. 4D and FIG. 5A, the release paper RP3 of the positive electrode 2 is removed and an electrode (the positive electrode 2, the separator 3, and the negative electrode 4) is prepared.

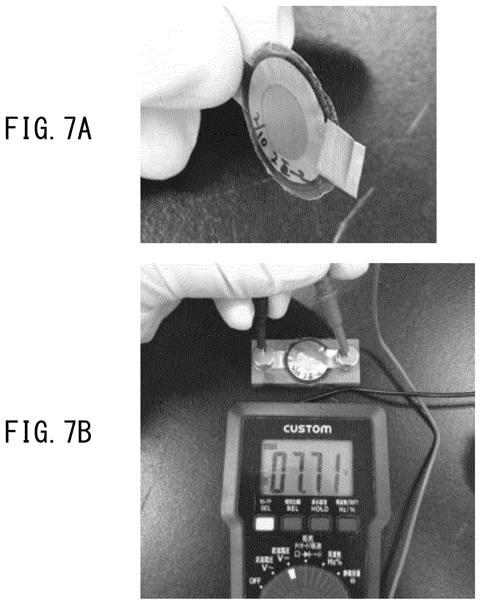

Next, as shown in FIG. 5B and FIG. 5C, (the resin layer 1A of) the positive electrode current collector 1, the seal material 20-1 (20-2), the electrode (the positive electrode 2, the separator 3, and the negative electrode 4), and (the resin layer 5A of) the negative electrode current collector 5 are stacked and the assembly is heated in a vacuum state (for example, 160°C and 1 min), whereby the unit cell 10-1 (10-2) is prepared. The external dimension of the seal material 20-1 (20-2) is preferably larger than the external dimension of (the resin layer 1A) of the positive electrode current collector 1 and the external dimension of (the resin layer 5A) of the negative electrode current collector 5. From the viewpoint of the air seal, the heating is preferably performed in a vacuum state. The heating temperature depends on the seal material 20-1 (20-2). At the time of preparation of the prototype shown in the later explained FIG. 7A and

FIG. 7B, as the seal material 20-1 (20-2), a seal material (PP) made by Dai Nippon Printing Co., Ltd. was used.

Next, as shown in FIG. 6A, the unit cell 10-1 and the unit cell 10-2 are stacked and the aluminum foil functioning as the metal layer 1B of the positive electrode current collector 1 of the unit cell 10-1 and the copper foil or the nickel foil functioning as the metal layer 5B of the negative electrode current collector 5 of the unit cell 10-2 are arranged.

Next, as shown in FIG. 6A and FIG. 6B, the assembly is heated in the vacuum state (for example, 160°C for 1 min) whereby a stacked body (the thin type stacked battery 100 of the second embodiment) is prepared.

FIG. 7A and FIG. 7B are photos of prototypes of the thin type stacked battery 100 of the second embodiment shown in FIG. 3. In more detail, FIG. 7A shows the thickness of the prototype of the thin type stacked battery 100 of the second embodiment, while FIG. 7B shows the voltage of the prototype of the thin type stacked battery 100 of the second embodiment.

In the thin type stacked battery 100 of the second embodiment as well, it is possible to simultaneously satisfy lighter weight, reduced thickness, and moisture permeation resistance.

In this way, embodiments of the thin type stacked battery of the present disclosure were explained with reference to the drawings, but the thin type stacked battery of the present disclosure is not limited to the above-mentioned embodiments and can be suitably changed within a range not deviating from the gist of the present disclosure. The constitutions of the examples of the above-mentioned embodiments may be suitably combined.

## Claims

1. A thin type stacked battery (100) comprising:
a battery pack (10) formed by a plurality of stacked unit cells (10-1, 10-2, 10-3; 10-1, 10-2), each unit cell being formed by positive electrode current collector (1), positive electrode (2), electrolyte, negative electrode (4), and negative electrode current collector (5) stacked in that order, and
a seal material (20-1, 20-2, 20-3; 20-1, 20-2), wherein
the positive electrode current collector (1) of a first end unit cell (10-1) which is the unit cell positioned at one end in the stacking direction among the plurality of stacked unit cells (10-1, 10-2, 10-3; 10-1, 10-2) forming the battery pack (10), wherein the positive electrode current collector (1) of the first end unit cell (10-1) does not abut against the negative electrode current collector (5) of the unit cell (10-3; 10-2) which adjoins the first end unit cell (10-1),
the negative electrode current collector (5) of a second end unit cell (10-2) which is the unit cell positioned at the other end in the stacking direction among the plurality of stacked unit cells (10-1, 10-2, 10-3; 10-1, 10-2) forming the battery pack (10), wherein the negative electrode current collector (5) of the second end unit cell (10-2) does not abut against the positive electrode current collector (1) of the unit cell (10-3; 10-1) which adjoins the second end unit cell (10-2), and
the seal material (20-1, 20-2, 20-3; 20-1, 20-2)
function as an exterior body surrounding a surrounded part which corresponds to the battery pack (10) except the positive electrode current collector (1) of the first end unit cell (10-1) and the negative electrode current collector (5) of the second end unit cell (10-2),
at least one of the positive electrode current collector (1) of the first end unit cell (10-1) and the negative electrode current collector (5) of the second end unit cell (10-2) has a metal layer (1B, 5B), and
at least the negative electrode current collector (5) of the first end unit cell (10-1) and the positive electrode current collector (1) of the second end unit cell (10-2) have resin layers (SA, 1A).

2. The thin type stacked battery (100) according to claim 1, wherein the electrolyte is a solid electrolyte.

3. The thin type stacked battery (100) according to claim 1, wherein the negative electrode current collector (5) of the first end unit cell (10-2), the positive electrode current collector (1) of the second end unit cell (10-2), and the positive electrode current collector (1) and the negative electrode current collector (5) of the unit cell (10-3) other than the first end unit cell (10-1) and the second end unit cell (10-2) among the plurality of stacked unit cells (10-1, 10-2, 10-3) forming the battery pack (10) are embedded in the seal material (20-1, 20-2, 20-3).

4. The thin type stacked battery (100) according to claim 1, wherein a thickness of each of the plurality of stacked unit cells (10-1, 10-2, 10-3; 10-1, 10-2) is 0.1 to 2 mm.

5. The thin type stacked battery (100) according to claim 1, wherein an electrolyte is included in at least one of the positive electrode and the negative electrode.

6. The thin type stacked battery (100) according to claim 1, wherein
the metal layer (1B) of the positive electrode current collector (1) of the first end unit cell (10-1) is larger than the positive electrode (2) of the first end unit cell (10-1), and
the metal layer (5B) of the negative electrode current collector (5) of the second end unit cell (10-2) is larger than the negative electrode (4) of the second end unit cell (10-2).

7. The thin type stacked battery (100) according to claim 1, wherein
the metal layer (1B) of the positive electrode current collector (1) of the first end unit cell (10-1) and the seal material (20-1) are welded, and
the metal layer (5B) of the negative electrode current collector (5) of the second end unit cell (10-2) and the seal material (20-2) are welded.

8. The thin type stacked battery (100) according to claim 1, wherein the seal material (20-1) surrounding the positive electrode (2), the electrolyte, and the negative electrode (4) of the first end unit cell (10-1) and the seal material (20-3; 20-2) surrounding the positive electrode (2), the electrolyte, and the negative electrode (4) of the unit cell (10-3; 10-2) adjoining the first end unit cell (10-1) are fused.

9. The thin type stacked battery (100) according to claim 1, wherein
the battery pack (10) includes the unit cell (10-3) which is not either of the first end unit cell (10-1) and the second end unit cell (10-2), and
the positive electrode current collector (1) and the negative electrode current collector (5) of the unit cell (10-3) which is not either of the first end unit cell (10-1) and the second end unit cell (10-2) have resin layers (1A, 5A).

10. The thin type stacked battery (100) according to claim 1, wherein
the unit cell (10-2) adjoining the first end unit cell (10-1) is the second end unit cell (10-2), and
the unit cell (10-1) adjoining the second end unit cell (10-2) is the first end unit cell (10-1).

11. The thin type stacked battery (100) according to claim 1, wherein
one of the positive electrode current collector (1) of the first end unit cell (10-1) and the negative electrode current collector (5) of the second end unit cell (10-2) is a current collector which does not have a metal layer (1B; 5B), and
the current collector which does not have the metal layer has a resin layer (1A; 5A).

12. The thin type stacked battery (100) according to claim 1, wherein the positive electrode current collector (1) of the first end unit cell (10-1) and the negative electrode current collector (5) of the second end unit cell (10-2) have metal layers (1B, 5B).

13. The thin type stacked battery (100) according to claim 12, wherein
the positive electrode current collector (1) of the first end unit cell (10-1) has a resin layer (1A), and
the negative electrode current collector (5) of the second end unit cell (10-2) has a resin layer (5A).

14. The thin type stacked battery (100) according to claim 13, wherein
the resin layer (1A) of the positive electrode current collector (1) of the first end unit cell (10-1) abuts against the positive electrode (2) of the first end unit cell (10-1), and
the resin layer (5A) of the negative electrode current collector (5) of the second end unit cell (10-2) abuts against the negative electrode (4) of the second end unit cell (10-2).

15. The thin type stacked battery (100) according to claim 12, wherein
the positive electrode current collector (1) of the first end unit cell (10-1) having the metal layer (1B) does not have a resin layer (1A), and
the negative electrode current collector (5) of the second end unit cell (10-2) having the metal layer (5B) does not have a resin layer (5A).

16. The thin type stacked battery (100) according to claim 15, wherein
the metal layer (1B) of the positive electrode current collector (1) of the first end unit cell (10-1) abuts against the positive electrode (2) of the first end unit cell (10-1), and
the metal layer (5B) of the negative electrode current collector (5) of the second end unit cell (10-2) abuts against the negative electrode (4) of the second end unit cell (10-2).

17. The thin type stacked battery (100) according to claim 9, wherein
the resin layer (5A) of the negative electrode current collector (5) of the first end unit cell (10-1) abuts against the resin layer (1A) of the positive electrode current collector (1) of the unit cell (10-3) which is not either of the first end unit cell (10-1) and the second end unit cell (10-2), and
the resin layer (5A) of the negative electrode current collector (5) of the unit cell (10-3) which is not either of the first end unit cell (10-1) and the second end unit cell (10-2) abuts against the resin layer (1A) of the positive electrode current collector (1) of the second end unit cell (10-2).
